# FASCICULE DE BREVET EUROPEEN

(11) **EP 3 398 491 B1**
(45) Date de publication et mention de la délivrance du brevet: **12.04.2023**
(21) Numéro de dépôt: 18169966.1
(22) Date de dépôt: 27.04.2018
(51) Int. Cl.: A47J 36/06

(54) **COUVERCLE COMPORTANT UNE PIÈCE EN VERRE**
DECKEL, DER EIN GLASTEIL UMFASST
LID COMPRISING A GLASS PART

(30) Priorité: 05.05.2017 FR 1753998
(43) Date de publication de la demande: 07.11.2018
(73) Titulaire: SEB S.A., 69130 Ecully (FR)
(72) Inventeur: DESHAYES, Jean-Louis, 53700 AVERTON (FR); MORIN, Yoann, 53470 MARTIGNE-SUR-MAYENNE (FR)
(74) Mandataire: SEB Développement

(56) Documents cités:
- CN-U- 203 400 022
- CN-U- 204 636 046
- CN-U- 205 125 970
- DE-U1-202014 000 505
- FR-A1- 3 002 426
- JP-U- S55 146 023

## Description

La présente invention concerne le domaine technique des couvercles de récipients culinaires utilisés pour la préparation et/ou la cuisson des aliments.

La présente invention concerne plus particulièrement les couvercles du type précité comportant une pièce en verre.

La présente invention concerne notamment, mais non exclusivement, les couvercles des récipients de travail des appareils électroménagers de préparation culinaire, chauffants ou non.

Le document FR3002426 divulgue un couvercle pour un récipient de travail d'un appareil électroménager de préparation culinaire multifonctions, comportant une pièce annulaire inférieure et une pièce en verre portée par la pièce annulaire inférieure. Toutefois la pièce en verre est maintenue par un habillage métallique apte à se déformer pour solidariser la pièce annulaire inférieure et la pièce en verre par compression. Un tel assemblage est délicat à réaliser.

Un objet de la présente invention est de proposer un couvercle du type précité, dont la construction est plus simple à réaliser.

Cet objet est atteint avec un couvercle pour un récipient culinaire, notamment pour un récipient de travail d'un appareil électroménager de préparation culinaire, comportant une pièce annulaire inférieure, et une pièce en verre portée par la pièce annulaire inférieure, la pièce en verre étant maintenue annulairement par une pièce annulaire intermédiaire assemblée avec la pièce annulaire inférieure, la pièce annulaire intermédiaire présentant une partie supérieure recouverte par une pièce annulaire supérieure, la pièce annulaire supérieure présentant une jupe extérieure recouvrant latéralement la pièce annulaire inférieure, du fait que la pièce en verre porte un surmoulage périphérique, et que la pièce annulaire intermédiaire et la pièce annulaire inférieure viennent en appui sur le surmoulage périphérique de part et d'autre de la pièce en verre. Cette disposition permet un meilleur maintien de la pièce en verre, ainsi qu'une meilleure étanchéité entre la pièce en verre et la pièce annulaire intermédiaire et entre la pièce en verre et la pièce annulaire inférieure. Ainsi la pièce annulaire supérieure peut former un cache dépourvu d'éléments mécaniques pour assurer le maintien de la pièce en verre. La pièce annulaire supérieure peut être simplement clipsée ou vissée sur la pièce annulaire inférieure et/ou sur la pièce annulaire intermédiaire.

Selon une forme de réalisation avantageuse, la pièce annulaire intermédiaire est assemblée par des vis avec la pièce annulaire inférieure pour maintenir annulairement la pièce en verre. Cette disposition permet d'obtenir un maintien de la pièce en verre simple, fiable et économique.

Avantageusement encore, la pièce annulaire supérieure vient en appui périphérique contre la pièce annulaire inférieure. Cette disposition permet de confiner l'espace entre la pièce annulaire supérieure et la pièce annulaire inférieure.

Avantageusement alors, la pièce annulaire intermédiaire et/ou la pièce annulaire supérieure comporte(nt) au moins une languette interne venant en prise sous la pièce annulaire inférieure, et de préférence deux languettes internes opposées venant en prise sous la pièce annulaire inférieure. Cette disposition permet d'obtenir un clipsage de la pièce annulaire supérieure et/ou de la pièce annulaire intermédiaire sur la pièce annulaire inférieure.

Selon un mode de réalisation, le couvercle comporte au moins une poignée assemblée avec la pièce annulaire inférieure au moyen d'au moins une autre vis, et de préférence au moyen de deux autres vis. Cette disposition permet de simplifier la conception de la pièce annulaire supérieure.

Avantageusement alors, ladite au moins une autre vis est utilisée avec un écrou vissé sur ladite au moins une autre vis. Cette disposition permet de faciliter l'assemblage de la poignée.

Avantageusement encore, ladite au moins une autre vis traverse la pièce annulaire inférieure, la pièce annulaire intermédiaire, la pièce annulaire supérieure et la poignée. Cette disposition permet de réaliser un assemblage particulièrement robuste.

Avantageusement encore, la pièce annulaire supérieure est réalisée en métal, notamment en métal moulé ou en métal embouti.

Selon un autre mode de réalisation, le couvercle comporte au moins une poignée issue de la pièce annulaire supérieure. Une telle réalisation est bien adaptée à une pièce annulaire supérieure réalisée en matière plastique.

Avantageusement encore, la pièce annulaire inférieure est assemblée par au moins une autre vis avec la pièce annulaire supérieure. Cette disposition permet de réaliser un assemblage simple, fiable et économique.

Avantageusement alors, ladite au moins une autre vis est montée sous la poignée. Cette disposition permet notamment de cacher la tête de ladite autre vis sous la poignée.

Avantageusement alors, deux autres vis sont montées sous la poignée. Cette disposition permet de réaliser un assemblage simple et robuste.

Avantageusement encore, le couvercle comporte deux poignées opposées. Cette disposition permet de faciliter la manipulation du couvercle.

Avantageusement encore, la pièce annulaire inférieure comporte des languettes internes de verrouillage par baïonnette. Cette disposition permet de réaliser de manière simple et économique un couvercle pouvant être verrouillé par baïonnette sur un récipient tel qu'un récipient de travail d'un appareil électroménager de préparation culinaire, notamment d'un appareil électroménager de préparation culinaire chauffant.

L'invention sera mieux comprise à l'étude de deux exemples de réalisation, pris à titre nullement limitatif, illustrés dans les figures annexées, dans lesquelles :
- la figure 1 est une vue en perspective et en éclaté d'un premier exemple de réalisation d'un couvercle selon l'invention, dans laquelle les orientations des différentes pièces sont légèrement différentes pour mieux montrer les parties caractéristiques desdites pièces,
- la figure 2 est une vue partielle en élévation et en coupe du couvercle illustré sur la figure 1,
- la figure 3 est une vue en perspective de dessous du couvercle illustré sur les figures 1 et 2,
- la figure 4 est une vue en perspective et en éclaté d'un deuxième exemple de réalisation d'un couvercle selon l'invention,
- la figure 5 est une vue en perspective de dessous du couvercle illustré sur la figure 4.

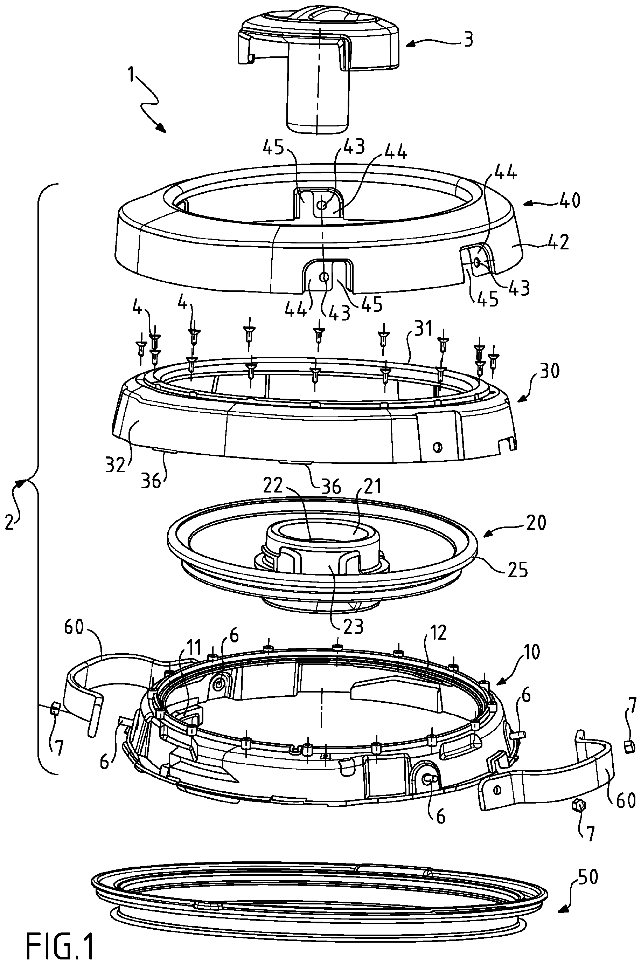

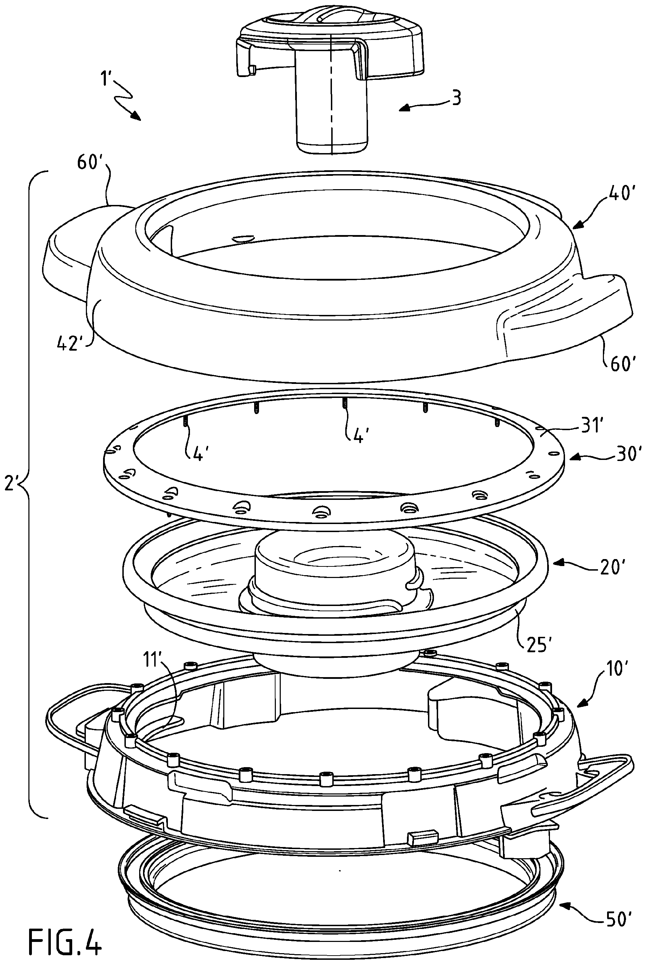

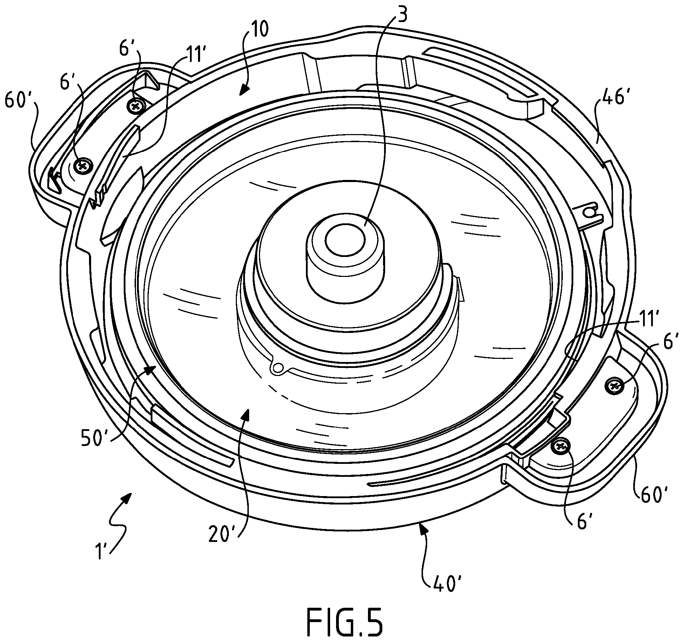

Le couvercle 1 pour récipient culinaire, illustré sur les figures 1 à 3, ainsi que le couvercle 1' pour récipient culinaire, illustré sur les figures 4 et 5, sont prévus pour être utilisés avec un récipient de travail d'un appareil électroménager de préparation culinaire tel que notamment un robot culinaire chauffant (non représenté sur les figures).

Tel que visible sur les figures 1 et 4, le couvercle 1, 1' comporte une pièce annulaire inférieure 10 ; 10', une pièce en verre 20 ; 20', une pièce annulaire intermédiaire 30 ; 30', et une pièce annulaire supérieure 40 ; 40'. La pièce annulaire inférieure 10 ; 10', la pièce en verre 20 ; 20', la pièce annulaire intermédiaire 30 ; 30', et la pièce annulaire supérieure 40 ; 40' forment un corps principal 2 ; 2' du couvercle 1, 1'.

Plus particulièrement dans les exemples de réalisation illustrés sur les figures, la pièce annulaire inférieure 10 ; 10' comporte des languettes internes 11 ; 11' de verrouillage par baïonnette, prévues pour venir en prise avec le récipient de travail de l'appareil électroménager de préparation culinaire.

Plus particulièrement dans les exemples de réalisation illustrés sur les figures, la pièce en verre 20 du couvercle 1 et la pièce en verre 20' du couvercle 1' sont identiques. La pièce en verre 20 est annulaire et présente un passage central dans lequel est montée une protubérance centrale 21. La protubérance centrale 21 comporte un logement 22 de réception d'un bouchon 3 amovible. Le logement 22 est de préférence traversant. Si désiré un passage d'échappement de vapeur 23 peut être ménagé dans la pièce en verre 20 et/ou dans la protubérance centrale 21 en complément ou en substitution du logement 22.

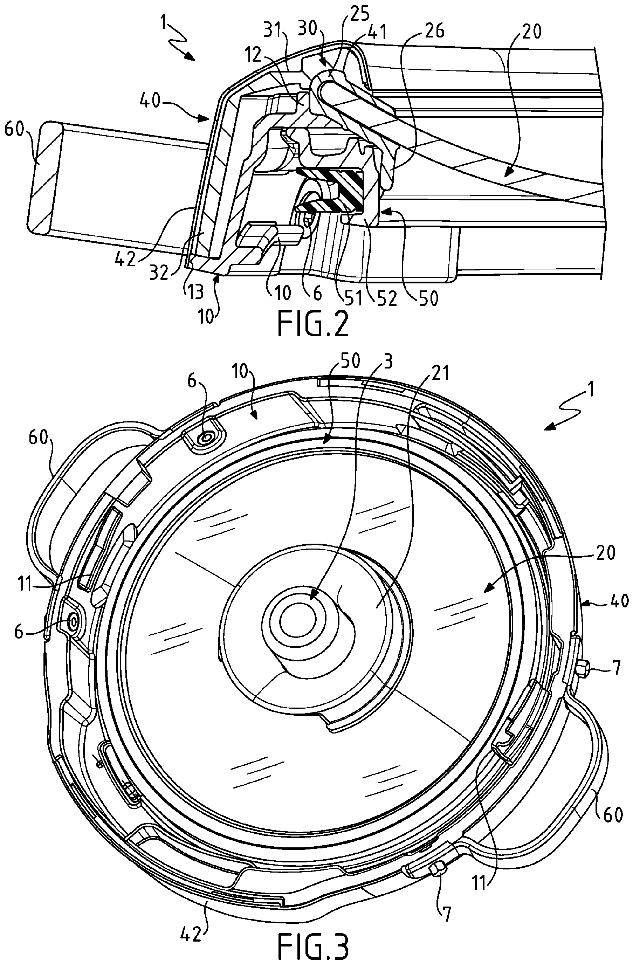

Plus particulièrement dans les exemples de réalisation illustrés sur les figures, le couvercle 1 ; 1' comporte un élément annulaire d'étanchéité 50 ; 50' prévu pour venir en appui sur un rebord supérieur du récipient de travail de l'appareil électroménager de préparation culinaire. Tel que mieux visible sur la figure 2, l'élément annulaire d'étanchéité 50 comporte un joint 51 monté dans un porte-joint 52 sous la pièce annulaire inférieure 10. Le porte-joint 52 peut notamment être fixé à la pièce annulaire inférieure 10.

Dans les deux exemples de réalisation illustrés aux figures, la pièce en verre 20 ; 20' est portée par la pièce annulaire inférieure 10 ; 10'. La pièce en verre 20 ; 20' est maintenue annulairement par la pièce annulaire intermédiaire 30 ; 30' assemblée avec la pièce annulaire inférieure 10 ; 10'. La pièce annulaire intermédiaire 30 ; 30' présente une partie supérieure 31 ; 31' recouverte par la pièce annulaire supérieure 40 ; 40'. La pièce annulaire supérieure 40 ; 40' présente une jupe extérieure 42 ; 42' recouvrant latéralement la pièce annulaire inférieure 10 ; 10'. Toutefois la pièce annulaire supérieure 40 ; 40' ne recouvre pas nécessairement entièrement la pièce annulaire inférieure 10 ; 10'.

Plus particulièrement dans les exemples de réalisation illustrés sur les figures, la pièce annulaire intermédiaire 30 ; 30' est assemblée par des vis 4 ; 4' avec la pièce annulaire inférieure 10 ; 10' pour maintenir annulairement la pièce en verre 20 ; 20'. Les vis 4 ; 4' présentent des têtes de vis disposées de préférence du côté de la pièce annulaire intermédiaire 30 ; 30'. Ainsi la pièce annulaire supérieure 40 ; 40' montée sur la pièce annulaire inférieure 10 ; 10' cache les vis 4 ; 4'.

Plus particulièrement dans les exemples de réalisation illustrés sur les figures, la pièce annulaire supérieure 40 ; 40' vient en appui périphérique contre la pièce annulaire inférieure 10 ; 10'.

Plus particulièrement dans les exemples de réalisation illustrés sur les figures, la pièce en verre 20 ; 20' porte un surmoulage périphérique 25 ; 25'. Le surmoulage périphérique 25 ; 25' est réalisé de préférence en matériau élastomère, notamment en silicone.

Tel que visible sur la figure 2, le surmoulage périphérique 25 est engagé dans une gorge inférieure 41 de la pièce annulaire supérieure 40. La pièce annulaire intermédiaire 30 et la pièce annulaire inférieure 10 viennent en appui sur le surmoulage périphérique 25 de part et d'autre de la pièce en verre 20. Le surmoulage périphérique 25 vient en appui contre une bordure interne supérieure 12 de la pièce annulaire inférieure 10. Le surmoulage périphérique 25 comporte une bordure interne inférieure 26 s'écartant de la pièce en verre 20. La bordure interne inférieure 26 vient en appui contre le porte-joint 52. Le couvercle 1' présente un montage de la pièce en verre 20' sur la pièce annulaire inférieure 10' similaire à celui de la pièce en verre 20 sur la pièce annulaire inférieure 10.

Le couvercle 1 illustré sur les figures 1 à 3 comporte au moins une poignée 60 assemblée avec la pièce annulaire inférieure 10 au moyen d'au moins une autre vis 6.

Tel que mieux visible sur la figure 3, le couvercle 1 comporte deux poignées 60 opposées. Chaque poignée 60 est assemblée avec la pièce annulaire inférieure 10 au moyen de deux autres vis 6. Chacune des autres vis 6 est utilisée avec un écrou 7. Les autres vis 6 présentent une tête de vis agencée à l'intérieur de la pièce annulaire inférieure 10. Ainsi les autres vis 6 ne sont pas visibles de l'extérieur du couvercle 1. Les écrous 7 sont vissés à l'extérieur des poignées 60 sur l'extrémité des autres vis 6. Chaque autre vis 6 traverse la pièce annulaire inférieure 10, la pièce annulaire intermédiaire 30, la pièce annulaire supérieure 40 et l'une des poignées 60. La pièce annulaire supérieure 40 peut notamment être réalisée en métal. La pièce annulaire supérieure 40 présente des perçages 43 dans la jupe extérieure 42 pour le passage des autres vis 6. Les perçages 43 sont ménagés dans des emboutis 44 prévus pour le montage des poignées 60. Pour faciliter la réalisation des emboutis 44, la jupe extérieure 42 présente des découpes 45 au niveau des emboutis 44.

Tel que visible sur la figure 2, la pièce annulaire intermédiaire 30 comporte une jupe inférieure 32 venant en appui sur la pièce annulaire inférieure 10. La jupe extérieure 42 de la pièce annulaire supérieure 40 descend jusqu'à un bord périphérique 13 de la pièce annulaire inférieure 10. Tel que visible sur la figure 1, la pièce annulaire intermédiaire 30 comporte au moins des languettes internes 36 issues de la jupe inférieure 32. Les languettes internes 36 peuvent venir en prise sous la pièce annulaire inférieure 10.

La jupe extérieure 42 de la pièce annulaire supérieure 40 recouvre entièrement la jupe inférieure 32 de la pièce annulaire intermédiaire 30, hormis au niveau des découpes 45.

Le couvercle 1' illustré sur les figures 4 et 5 comporte au moins une poignée 60' issue de la pièce annulaire supérieure 40'. La pièce annulaire inférieure 10' est assemblée par au moins une autre vis 6' avec la pièce annulaire supérieure 40'.

Tel que visible sur la figure 4, la pièce annulaire intermédiaire 30' forme un anneau. Ainsi la jupe extérieure 42' de la pièce annulaire supérieure 40' recouvre directement la pièce annulaire inférieure 10'. La pièce annulaire supérieure 40' comporte au moins une languette interne 46' venant en prise sous la pièce annulaire inférieure 10'.

Tel que mieux visible sur la figure 5, le couvercle 1' comporte deux poignées 60' opposées issues de la pièce annulaire supérieure 40'. La pièce annulaire inférieure 10' est assemblée par quatre autres vis 6' avec la pièce annulaire supérieure 40'. Deux autres vis 6' sont montées sous chaque poignée 60'. Ainsi les autres vis 6' présentent des têtes de vis disposées du côté de pièce annulaire inférieure 10'.

Le couvercle 1 et le couvercle 1' permettent d'obtenir une surface libre importante pour la pièce en verre 20 ; 20', avec un assemblage aisé.

A titre de variante, la pièce annulaire intermédiaire 30 ; 30' n'est pas nécessairement assemblée par vissage avec la pièce annulaire inférieure 10 ; 10'. Un assemblage par clispage et/ou par rivetage peut notamment être envisagé. La pièce annulaire intermédiaire 30 peut comporter si désiré au moins une languette interne issue de la jupe inférieure 32, prévue pour venir en prise sous la pièce annulaire inférieure 10, et de préférence au moins deux languettes internes prévues pour venir en prise sous la pièce annulaire inférieure 10.

A titre de variante, les poignées 60 ne sont pas nécessairement assemblées par vissage avec la pièce annulaire inférieure 10. Un assemblage par clispage et/ou par rivetage peut notamment être envisagé.

A titre de variante, les poignées 60 ne sont pas nécessairement assemblées avec la pièce annulaire inférieure 10. Un assemblage avec la pièce annulaire intermédiaire 30 peut notamment être envisagé.

A titre de variante, la pièce annulaire inférieure 10' n'est pas nécessairement assemblée par vissage avec la pièce annulaire supérieure 40'. Un assemblage par clispage et/ou par rivetage peut notamment être envisagé.

A titre de variante, la pièce en verre 20 ; 20' ne comporte pas nécessairement un surmoulage périphérique 25 ; 25'. Si désiré un joint peut notamment être agencé entre la pièce annulaire intermédiaire 30 ; 30' et la pièce en verre 20 ; 20' et/ou entre la pièce annulaire inférieure 10 ; 10' et la pièce en verre 20 ; 20'.

La présente invention n'est nullement limitée aux exemples de réalisation décrits et à leurs variantes, mais englobe de nombreuses modifications dans le cadre des revendications.

## Revendications

1. Couvercle (1 ; 1') pour un récipient culinaire, notamment pour un récipient de travail d'un appareil électroménager de préparation culinaire, comportant une pièce annulaire inférieure (10 ; 10'), et une pièce en verre (20 ; 20') portée par la pièce annulaire inférieure (10 ; 10'), la pièce en verre (20 ; 20') étant maintenue annulairement par une pièce annulaire intermédiaire (30 ; 30') assemblée avec la pièce annulaire inférieure (10 ; 10'), la pièce annulaire intermédiaire (30 ; 30') présentant une partie supérieure (31 ; 31') recouverte par une pièce annulaire supérieure (40 ; 40'), la pièce annulaire supérieure (40 ; 40') présentant une jupe extérieure (42 ; 42') recouvrant latéralement la pièce annulaire inférieure (10 ; 10'), **caractérisé en ce que** la pièce en verre (20 ; 20') porte un surmoulage périphérique (25 ; 25') et **en ce que** la pièce annulaire intermédiaire (30 ; 30') et la pièce annulaire inférieure (10 ; 10') viennent en appui sur le surmoulage périphérique (25 ; 25') de part et d'autre de la pièce en verre (20 ; 20').

2. Couvercle (1 ; 1') selon la revendication 1, **caractérisé en ce que** la pièce annulaire intermédiaire (30 ; 30') est assemblée par des vis (4 ; 4') avec la pièce annulaire inférieure (10 ; 10') pour maintenir annulairement la pièce en verre (20 ; 20').

3. Couvercle (1 ; 1') selon l'une des revendications 1 ou 2, **caractérisé en ce que** la pièce annulaire supérieure (40 ; 40') vient en appui périphérique contre la pièce annulaire inférieure (10 ; 10').

4. Couvercle (1 ; 1') selon la revendication 3, **caractérisé en ce que** la pièce annulaire intermédiaire (30) et/ou la pièce annulaire supérieure (40') comporte(nt) au moins une languette interne (36 ; 46') venant en prise sous la pièce annulaire inférieure (10; 10'), et de préférence deux languettes internes (36 ; 46') opposées venant en prise sous la pièce annulaire inférieure (10 ; 10').

5. Couvercle (1) selon l'une des revendications 1 à 4, **caractérisé en ce qu'**il comporte au moins une poignée (60) assemblée avec la pièce annulaire inférieure (10) au moyen d'au moins une autre vis (6), et de préférence au moyen de deux autres vis (6).

6. Couvercle (1) selon la revendication 5, **caractérisé en ce que** ladite au moins une autre vis (6) est utilisée avec un écrou (7).

7. Couvercle (1) selon l'une des revendications 5 ou 6, **caractérisé en ce que** ladite au moins une autre vis (6) traverse la pièce annulaire inférieure (10), la pièce annulaire intermédiaire (30), la pièce annulaire supérieure (40) et la poignée (60).

8. Couvercle (1) selon l'une des revendications 1 à 7, **caractérisé en ce que** la pièce annulaire supérieure (40) est réalisée en métal.

9. Couvercle (1') selon l'une des revendications 1 à 4, **caractérisé en ce qu'**il comporte au moins une poignée (60') issue de la pièce annulaire supérieure (40').

10. Couvercle (1') selon l'une des revendications 1 à 4, **caractérisé en ce que** la pièce annulaire inférieure (10') est assemblée par au moins une autre vis (6') avec la pièce annulaire supérieure (40').

11. Couvercle (1') selon la revendication 9 et la revendication 10, **caractérisé en ce que** ladite au moins une autre vis (6') est montée sous la poignée (60').

12. Couvercle (1') selon la revendication 11, **caractérisé en ce que** deux autres vis (6') sont montées sous la poignée (60').

13. Couvercle (1 ; 1') selon l'une des revendications 5, 6, 7, 9, 11 ou 12, **caractérisé en ce qu'**il comporte deux poignées (60 ; 60') opposées.

14. Couvercle (1 ; 1') selon l'une des revendications 1 à 13, **caractérisé en ce que** la pièce annulaire inférieure (10 ; 10') comporte des languettes internes (11 ; 11') de verrouillage par baïonnette.

## Patentansprüche

1. Deckel (1; 1') für einen Kochbehälter, insbesondere für einen Arbeitsbehälter eines Kochzubereitungshaushaltsgeräts, umfassend ein unteres ringförmiges Teil (10; 10') und ein Glasteil (20; 20'), das von dem unteren ringförmigen Teil (10; 10') getragen wird, wobei das Glasteil (20; 20') von einem mittleren ringförmigen Teil (30; 30'), das mit dem unteren ringförmigen Teil (10; 10') zusammengefügt ist, ringförmig gehalten wird, wobei das mittlere ringförmige Teil (30; 30') ein oberes Teil (31; 31') aufweist, das von einem oberen ringförmigen Teil (40; 40') verdeckt ist, wobei das obere ringförmige Teil (40; 40') einen äußeren Rock (42; 42') aufweist, der das untere ringförmige Teil (10; 10') seitlich verdeckt, **dadurch gekennzeichnet, dass** das Glasteil (20; 20') eine umlaufende Überformung (25; 25') trägt und dadurch, dass das mittlere ringförmige Teil (30; 30') und das untere ringförmige Teil (10; 10') beiderseits des Glasteils (20; 20') auf der umlaufenden Überformung (25; 25') aufliegen.

2. Deckel (1; 1') nach Anspruch 1, **dadurch gekennzeichnet, dass** das mittlere ringförmige Teil (30; 30') durch Schrauben (4; 4') mit dem unteren ringförmigen Teil (10; 10') zusammengefügt ist, um das Glasteil (20; 20') ringförmig zu halten.

3. Deckel (1; 1') nach einem der Ansprüche 1 oder 2, **dadurch gekennzeichnet, dass** das obere ringförmige Teil (40; 40') umlaufend am unteren ringförmigen Teil (10; 10') aufliegt.

4. Deckel (1; 1') nach Anspruch 3, **dadurch gekennzeichnet, dass** das mittlere ringförmige Teil (30) und/oder das obere ringförmige Teil (40') mindestens eine innere Lasche (36; 46') umfasst/umfassen, die unter dem unteren ringförmigen Teil (10; 10') zum Eingriff kommt, und vorzugsweise zwei gegenüberliegende innere Laschen (36; 46'), die unter dem unteren ringförmigen Teil (10; 10') zum Eingriff kommen.

5. Deckel (1) nach einem der Ansprüche 1 bis 4, **dadurch gekennzeichnet, dass** er mindestens einen Griff (60) umfasst, der mittels mindestens einer weiteren Schraube (6) und vorzugsweise mittels zweier weiterer Schrauben (6) mit dem unteren ringförmigen Teil (10) zusammengefügt ist.

6. Deckel (1) nach Anspruch 5, **dadurch gekennzeichnet, dass** die mindestens eine weitere Schraube (6) mit einer Schraubenmutter (7) verwendet wird.

7. Deckel (1) nach einem der Ansprüche 5 oder 6, **dadurch gekennzeichnet, dass** die mindestens eine weitere Schraube (6) das untere ringförmige Teil (10), das mittlere ringförmige Teil (30), das obere ringförmige Teil (40) und den Griff (60) durchquert.

8. Deckel (1) nach einem der Ansprüche 1 bis 7, **dadurch gekennzeichnet, dass** das obere ringförmige Teil (40) aus Metall hergestellt ist.

9. Deckel (1') nach einem der Ansprüche 1 bis 4, **dadurch gekennzeichnet, dass** er mindestens einen Griff (60') umfasst, der aus dem oberen ringförmigen Teil (40') hervorgeht.

10. Deckel (1') nach einem der Ansprüche 1 bis 4, **dadurch gekennzeichnet, dass** das untere ringförmige Teil (10') durch mindestens eine weitere Schraube (6') mit dem oberen ringförmigen Teil (40') zusammengefügt ist.

11. Deckel (1') nach Anspruch 9 und Anspruch 10, **dadurch gekennzeichnet, dass** die mindestens eine weitere Schraube (6') unter dem Griff (60') angebracht ist.

12. Deckel (1') nach Anspruch 11, **dadurch gekennzeichnet, dass** zwei weitere Schrauben (6') unter dem Griff (60') angebracht sind.

13. Deckel (1; 1') nach einem der Ansprüche 5, 6, 7, 9, 11 oder 12, **dadurch gekennzeichnet, dass** er zwei gegenüberliegende Griffe (60; 60') umfasst.

14. Deckel (1; 1') nach einem der Ansprüche 1 bis 13, **dadurch gekennzeichnet, dass** das untere ringförmige Teil (10; 10') innere Laschen (11; 11') zum Verriegeln durch Bajonettverschluss umfasst.

## Claims

1. Lid (1; 1') for a cooking container, in particular a working container of a cooking preparation household appliance, comprising a lower ring part (10; 10'), and a glass part (20; 20') borne by the lower ring part (10; 10'), the glass part (20; 20') being annularly held by a middle ring part (30; 30') assembled with the lower ring part (10; 10'), the middle ring part (30; 30') having an upper portion (31; 31') covered by an upper ring part (40; 40'), the upper ring part (40; 40') having an outer skirt (42; 42') laterally covering the lower ring part (10; 10'), **characterised in that** the glass part (20; 20') bears a peripheral overmoulding (25; 25') and **in that** the middle ring part (30; 30') and the lower ring part (10; 10') bear against the peripheral overmoulding (25; 25') on either side of the glass part (20; 20').

2. Lid (1; 1') according to claim 1, **characterised in that** the middle ring part (30; 30') is assembled by screws (4; 4') with the lower ring part (10; 10') to annularly maintain the glass part (20; 20').

3. Lid (1; 1') according to one of claims 1 or 2, **characterised in that** the upper ring part (40; 40') peripherally bears against the lower ring part (10; 10').

4. Lid (1; 1') according to claim 3, **characterised in that** the middle ring part (30) and/or the upper ring part (40') include at least one internal tab (36; 46') engaging under the lower ring part (10; 10'), and preferably two opposite internal tabs (36; 46') engaging under the lower ring part (10; 10').

5. Lid (1) according to one of claims 1 to 4, **characterised in that** it comprises at least one handle (60) assembled with the lower ring part (10) by means of at least one other screw (6), and preferably by means of two other screws (6).

6. Lid (1) according to claim 5, **characterised in that** said at least one other screw (6) is used with a nut (7).

7. Lid (1) according to one of claims 5 or 6, **characterised in that** said at least one other screw (6) passes through the lower ring part (10), the middle ring part (30), the upper ring part (40) and the handle (60).

8. Lid (1) according to one of claims 1 to 7, **characterised in that** the upper ring part (40) is made of metal.

9. Lid (1') according to one of claims 1 to 4, **characterised in that** it comprises at least one handle (60') coming from the upper ring part (40').

10. Lid (1') according to one of claims 1 to 4, **characterised in that** the lower ring part (10') is assembled by at least one other screw (6') with the upper ring part (40').

11. Lid (1') according to claim 9 and claim 10, **characterised in that** said at least one other screw (6') is mounted under the handle (60').

12. Lid (1') according to claim 11, **characterised in that** two other screws (6') are mounted under the handle (60').

13. Lid (1; 1') according to one of claims 5, 6, 7, 9, 11 or 12, **characterised in that** it comprises two opposite handles (60; 60').

14. Lid (1; 1') according to one of claims 1 to 13, **characterised in that** the lower ring part (10; 10') comprises internal tabs (11; 11') with bayonet locking.
